# EUROPEAN PATENT APPLICATION

(11) **EP 1 959 656 A1**
(43) Date of publication of application: **20.08.2008**
(21) Application number: 05814189.6
(22) Date of filing: 07.12.2005
(51) Int. Cl.: H04M 1/73, H04B 7/26, H04Q 7/38

(54) **MOBILE TERMINAL DEVICE, COMMUNICATION SYSTEM, METHOD OF CONTROLLING ELECTRIC POWER AND ELECTRIC POWER CONTROL PROGRAM**

(71) Applicant: Fujitsu Limited, Kawasaki-shi, Kanagawa 211-8588 (JP)
(72) Inventor: CHIBA, Toshiharu, Kawasaki-shi, Kanagawa 211-8588 (JP); TSUBOYA, Kenichi, Kawasaki-shi, Kanagawa 211-8588 (JP); SATOH, Kazutaka, Kawasaki-shi, Kanagawa 211-8588 (JP); DOHI, Yasushi, Kawasaki-shi, Kanagawa 211-8588 (JP)
(74) Representative: Sunderland, James Harry
(86) International application number: PCT/JP2005/022480
(87) International publication number: WO 2007/066393

(57) **Abstract**

When a call is transmitted to an emergency telephone number, a mobile terminal device (101) determines that there is an emergency, and notifies reception electric power from a mobile-communication base station (102) to a mobile-communication switching station (103), during an emergency communication. When the emergency communication ends, the mobile terminal device (101) controls to shift to a special mode operating by reducing electric power consumption. On the other hand, the mobile-communication switching station (103) receives reception electric power from the mobile terminal device (101), and transmits an instruction concerning a new intermittent reception interval to the mobile terminal device (101). The mobile terminal device (101) receives the instruction concerning the new intermittent reception interval, and sets a new intermittent reception interval according to the instruction concerning the intermittent reception interval. Thereafter, the mobile terminal device (101) performs an intermittent reception operation following the new set intermittent reception interval.

## Description

### TECHNICAL FIELD

The present invention relates to a mobile terminal device, a communication system, a electric power control method, and an electric power control program for properly reducing electric power consumption of a mobile terminal device in an emergency.

### BACKGROUND ART

Conventionally, as a technique for reducing consumption of a battery used in a mobile terminal device (for example, a mobile telephone terminal), Patent Document 1 discloses a technique for controlling to reduce the consumption of the battery used in the mobile terminal device when a remaining amount of the battery used in the mobile terminal device is small. Patent Document 2 also discloses a technique for controlling an intermediate power supply to be OFF during a predetermined time when a mobile terminal device receives an instruction (for example, an instruction by a button operation) to shift to an operation mode of reducing the consumption of a battery used in the mobile terminal device. Patent Document 3 also discloses a technique for controlling to extend an intermittent receiving interval when a remaining amount of a battery used in a mobile terminal device is small. Patent Document 4 also discloses a technique for controlling to extend an intermittent receiving interval when there is no movement of a mobile terminal device. Patent Document 5 also discloses a technique for controlling to periodically report a remaining amount of a battery used in a mobile terminal device to a network side, and controlling to disable a call arrival to the mobile terminal device when the remaining amount of the battery is smaller than a predetermined threshold value.

On the other hand, as a method for a person distressed in the mountain or sea to ask for a help from a rescuer (for example, a mountain rescue team), there has been an increasing trend that the distressed person asks for a rescue from the rescuer using a mobile terminal device owned by the distressed person. In this case, the distressed person asks for a rescue by communicating with the rescuer, or the distressed person asks for a rescue by notifying the rescuer about the position of the distressed person based on position registration information of the mobile terminal device. Therefore, the distressed person needs to control to reduce the consumption of a battery used in the mobile terminal device owned by the distressed person.

Patent Document 1: Japanese Patent Application Laid-open No. 2004-246811
Patent Document 2: Japanese Patent Application Laid-open No. 2004-80540
Patent Document 3: Japanese Patent Application Laid-open No. 2004-261430
Patent Document 4: Japanese Patent Application Laid-open No. 2004-169013
Patent Document 5: Japanese Patent Application Laid-open No. 2004-285190

### DISCLOSURE OF INVENTION

### PROBLEM TO BE SOLVED BY THE INVENTION

However, the conventional technique described above has a problem in that electric power consumption of a mobile terminal device cannot be properly reduced in an emergency, as explained below.

That is, the technique described in the Patent Document 1, 3, or 5 only controls to reduce the consumption of a battery when a remaining amount of the battery used in the mobile terminal device is small. Therefore, consumption of the battery used in the mobile terminal device is not reduced during a period from when an emergency occurs until when a remaining amount of the battery becomes small. Accordingly, electric power consumption of the mobile terminal device cannot be properly reduced in the emergency.

The technique described in the Patent Document 2 only controls to reduce the consumption of a battery used in a mobile terminal device when the mobile terminal device receives an instruction to shift to the operation mode of reducing the consumption of the battery used in the mobile terminal device. Because the shift is not necessarily instructed in the emergency, the electric power consumption of the mobile terminal device cannot be properly reduced in the emergency.

The technique described in the Patent Document 4 only controls to reduce the consumption of a battery used in a mobile terminal device when there is no movement in the mobile terminal device. When a distressed person as the owner of the mobile terminal device moves in the emergency, consumption of the battery cannot be reduced, and the electric power consumption of the mobile terminal device cannot be properly reduced in the emergency.

The present invention has been achieved to solve the above problems of the conventional techniques, and has an object of providing a mobile terminal device, a communication system, a electric power control method, and an electric power control program capable of properly reducing electric power consumption of a mobile terminal device in an emergency.

### MEANS FOR SOLVING PROBLEM

To solve the problem and achieve the object, the invention as set forth in claim 1 is a mobile terminal device having an electric-power-reduction operation mode for operation with reduced electric power consumption, and includes an emergency determining unit that determines whether there is an emergency; and an operation mode control unit that controls to shift to the electric-power-reduction operation mode when the emergency determining unit determines that there is the emergency.

According to the invention as set forth in claim 2, in the above invention, the emergency determining unit determines that there is the emergency, when there is a call transmission to an emergency telephone number as a communication destination for communication in the emergency.

According to the invention as set forth in claim 3, in the above invention, the emergency determining unit determines that there is the emergency, when there is a call arrival indicating an emergency instruction for the emergency from an external terminal.

According to the invention as set forth in claim 4, in the above invention, the operation mode control unit controls to reduce the electric power consumption due to one or some or all of a backlight of the mobile terminal device, a rear-surface display of the mobile terminal device, brightness of an LED of the mobile terminal device, an infrared communication function of the mobile terminal device, an USB-connection communication function of the mobile terminal device, an application of the mobile terminal device, and a key of the mobile terminal device, in the electric-power-reduction operation mode.

According to the invention as set forth in claim 5, in the above invention, a communication system includes a mobile terminal device that has an electric-power-reduction operation mode for operation with reduced electric power consumption; and a network control device that controls a network to which the mobile terminal device is connected, wherein the mobile terminal device includes an emergency determining unit that determines whether there is an emergency, an operation mode control unit that controls to shift to the electric-power-reduction operation mode when the emergency determining unit determines that there is the emergency, a reception-electric-power notifying unit that notifies reception electric power from the network to the network control device, when the emergency determining unit determines that there is the emergency, and an intermittent-reception-interval setting unit that sets a new intermittent reception interval according to an instruction concerning an intermittent reception interval transmitted from the network control device, after the reception-electric-power notifying unit notifies the reception power to the network control device, and the network control device includes a calculating unit that calculates an amplification amount of transmission electric power to the mobile terminal device and the new intermittent reception interval based on the reception electric power notified by the reception-electric-power notifying unit, a transmission electric-power amplifying unit that amplifies the transmission electric power according to the amplification amount of the transmission electric power calculated by the calculating unit, and an intermittent-reception-interval transmitting unit that transmits an instruction concerning the new intermittent reception interval calculated by the calculating unit, to the mobile terminal device.

According to the invention as set forth in claim 6, in the above invention, the transmitting unit transmits an instruction concerning the intermittent reception interval using a signal band, not usually used, of a PI transfer channel, and the receiving unit receives an instruction concerning an intermittent reception interval transmitted in the signal band.

According to the invention as set forth in claim 7, in the above invention, the network control device further comprises a call-arrival information transmitting unit that transmits call arrival information indicating a call arrival to the mobile terminal device to the mobile terminal device using a signal band, not usually used, of the PI transfer channel, and a transmission-source telephone-number transmitting unit that transmits a transmission-source telephone number of the call arrival to the mobile terminal device using a notification information channel, and the mobile terminal device further includes a transmission-source telephone-number obtaining unit that obtains in the notification information channel a transmission-source telephone number transmitted by the transmission-source telephone-number transmitting unit, when call arrival information transmitted by the call-arrival information transmitting unit is received in the signal band.

According to the invention as set forth in claim 8, in the above invention, a power control method for a mobile terminal device having an electric-power-reduction operation mode for operation with reduced electric power consumption, includes an emergency determining step of determining whether there is an emergency; and an operation mode control step of controlling to shift to the electric-power-reduction operation mode when it is determined that there is the emergency at the emergency determining step.

According to the invention as set forth in claim 9, in the above invention, a power control program for causing a computer to perform power control method for a mobile terminal device having an electric-power-reduction operation mode for operation with reduced electric power consumption, causes the computer to perform an emergency determining step of determining whether there is an emergency; and an operation mode control step of controlling to shift to the electric-power-reduction operation mode when it is determined that there is the emergency at the emergency determining step.

### EFFECT OF THE INVENTION

According to the invention of claim 1, 8, or 9, it is determined whether there is an emergency. When it is determined that there is an emergency, the operation mode is controlled to shift to the electric-power-reduction operation mode. Therefore, electric power consumption of the mobile terminal device can be properly reduced in the emergency.

According to the invention of claim 2, when there is a call to an emergency telephone number as the communication destination in the emergency, it is determined that there is an emergency. Therefore, electric power consumption of the mobile terminal device can be reduced triggered by the call to the emergency telephone number.

According to the invention of claim 3, when there is a call arrival of an emergency instruction showing the emergency from the external terminal, it can be determined that there is an emergency. Therefore, even when the owner of the mobile terminal device cannot operate (for example, a call operation to the emergency telephone number) the mobile terminal device in the emergency, electric power consumption of the mobile terminal device can be reduced.

According to the invention of claim 4, in the electric-power-reduction operation mode, control is performed to reduce the electric power consumption due to one or plural of the backlight of the mobile terminal device, the rear-surface display of the mobile terminal device, brightness of the LED of the mobile terminal device, the infrared communication function of the mobile terminal device, the USB-connection communication function of the mobile terminal device, the application of the mobile terminal device, and the key of the mobile terminal device. Therefore, the electric power consumption of the mobile terminal device can be properly reduced in the emergency by reducing the electric power consumption due to these factors.

According to the invention of claim 5, the mobile terminal device determines whether there is an emergency. When it is determined that there is an emergency, the mobile terminal device controls to shift to the electric-power-reduction operation mode. Therefore, electric power consumption of the mobile terminal device can be properly reduced in the emergency. When it is determined that there is an emergency, the mobile terminal device notifies reception electric power from the network to the network control device. The network control device calculates an amplification amount of transmission power to the mobile terminal device and a new intermittent reception interval based on the notified reception electric power. The network control device amplifies the transmission power according to the calculated amplification amount of transmission power, and transmits the instruction concerning the new intermittent reception interval to the mobile terminal device. The mobile terminal device sets the new intermittent reception interval according to the instruction concerning the intermittent reception interval transmitted from the network control device. Therefore, this method can securely reduce the electric power consumption of the mobile terminal device in the emergency, as compared with the method of autonomously extending the intermittent reception period by the mobile terminal device independently of the reception power (according to this method, synchronization is easily out at a place of weak reception power, and position registration operation is performed frequently. As a result, the electric power consumption cannot be necessarily reduced).

According to the invention of claim 6, an instruction concerning the intermittent reception interval is transmitted using a signal band, not usually used, of the PI transfer channel, and the instruction concerning the intermittent reception interval transmitted in the signal band is received. Because the existing PI transfer channel can be used, work of preparing a new exclusive channel can be avoided.

According to the invention of claim 7, the network control device transmits to the mobile terminal device call arrival information showing the arrival to the mobile terminal device using the signal band, not usually used, of the PI transfer channel, and transmits to the mobile terminal device a transmission-source telephone number of the call arrival using the annunciation information channel. Upon receiving the transmitted call arrival information in the signal band, the mobile terminal device obtains the transmitted transmission-source telephone number in the annunciation information channel. Therefore, this method does not require a starting of the dedicated physical channel and can maintain the intermittent reception state, as compared with the method of a usual missed call (according to this method, as a result of notifying the other-party telephone number by starting the dedicated physical channel, electric power is consumed like in the usual call arrival operation. Further, because the state is out from the intermittent reception state, the electric power consumption cannot be necessarily reduced). As a result, in the state that the electric power consumption of the mobile terminal device is reduced in the emergency, the other-party telephone number can be obtained.

### BRIEF DESCRIPTION OF DRAWINGS

[Fig.1] Fig. 1 is an explanatory diagram of an outline and characteristics of a network control system according to a first embodiment.
[Fig. 2] Fig. 2 depicts a hardware configuration of a mobile terminal device according to the first embodiment.
[Fig. 3] Fig. 3 depicts a software configuration of a mobile terminal device according to the first embodiment.
[Fig. 4] Fig. 4 depicts a software configuration of a wireless unit.
[Fig. 5] Fig. 5 is a configuration diagram of a PICH becoming the trigger of receiving a special signal.
[Fig. 6] Fig. 6 depicts a configuration of a mobile-communication base station according to the first embodiment.
[Fig. 7] Fig. 7 depicts a configuration of a mobile-communication switching station according to the first embodiment.
[Fig. 8] Fig. 8 is a sequence diagram of a process flow of a network control system according to the first embodiment. [Fig. 9] Fig. 9 is an explanatory diagram of an outline and characteristics of a network control system according to a second embodiment.

### EXPLANATIONS OF LETTERS OR NUMERALS

- 10: Communication system
- 101: Mobile terminal device
- 102: Mobile-communication base station
- 103: Mobile-communication switching station
- 104: Operation terminal
- 201: RF
- 202: MODEM
- 203: Control LSI
- 204: LCD/KEY
- 205: CPU
- 301: Wireless unit
- 302: Special-mode setting unit
- 303: Special-mode-setting defining unit
- 304: Functional control unit
- 305: Application control unit
- 306: Key control unit
- 401: Each-call control protocol
- 402: Movement managing unit
- 403: Wireless control protocol
- 404: Wireless control driver
- 405: OS
- 601: Transmission-electric-power control unit
- 602: Transmitting unit
- 701: Emergency-call-number detecting unit
- 702: Calculating unit
- 703: Transmission-electric-power amplification-instructing unit
- 704: Intermittent-reception-interval instructing unit

### BEST MODE(S) FOR CARRYING OUT THE INVENTION

Exemplary embodiments of a mobile terminal device, a communication system, a electric power control method, and an electric power control program according to the present invention will be explained below in detail with reference to the accompanying drawings.

### First embodiment

In the following embodiment, there will be sequentially explained an outline and characteristics of a communication system according to a first embodiment, a configuration of a mobile terminal device, a configuration of a mobile-communication base station 102, a configuration of a mobile-communication switching station 103, and a processing flow of the communication system, and effects according to the first embodiment is finally explained. The mobile terminal device is a mobile terminal device including a mobile telephone.

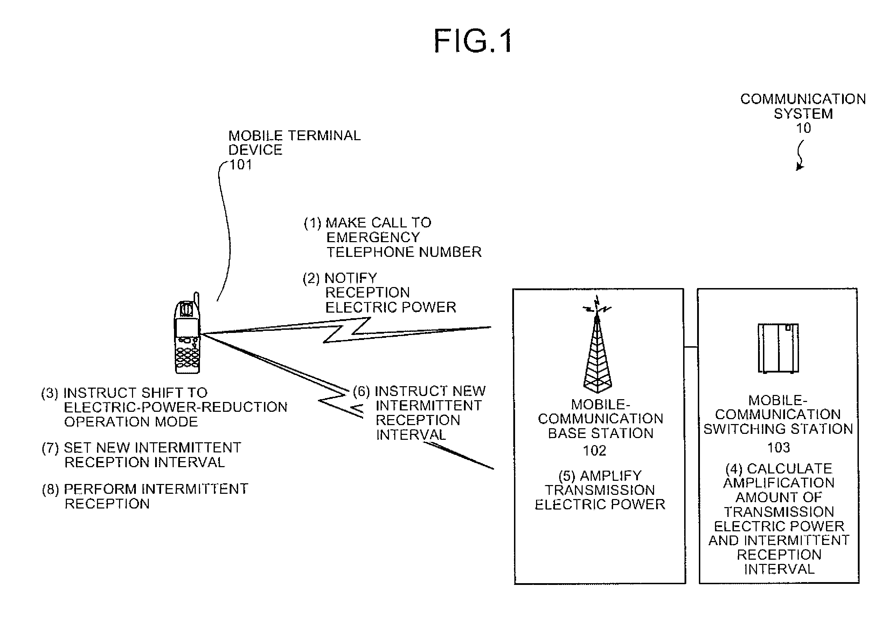

[Outline and characteristics of communication system]
First, an outline and characteristics of the communication system according to the first embodiment are explained with reference to Fig. 1. Fig. 1 is an explanatory diagram of the outline and characteristics of the communication system according to the first embodiment.

As shown Fig. 1, a communication system 10 in the first embodiment includes a mobile terminal device 101 of the W-CDMA system, a mobile-communication base station 102, and the mobile-communication switching station 103 that communicate with each other. The communication system has a characteristic in that electric power consumption of the mobile terminal device can be properly reduced in an emergency in the case of a distress in mountain or at sea. The mobile terminal device 101 corresponds to a "mobile terminal device" described in the claims, and the mobile-communication base station 102 and the mobile-communication switching station 103 also correspond to a "network control device" described in the claims.

Main characteristics are explained in detail below. As shown in Fig. 1, when a call is made to an emergency telephone number as an emergency communication destination (see (1) in Fig. 1), the mobile terminal device 101 determines that there is an emergency, and notifies the mobile-communication switching station 103 about reception electric power (that is, an electric reception amount of a serving cell, or an active cell during a handover) from the mobile-communication base station 102, during the emergency communication, via the mobile-communication base station 102 (see (2) in Fig. 1) .

When the emergency call communication ends, the mobile terminal device 101 controls to shift to a special mode (corresponding to an "electric-power-reduction operation mode" described in the claims) for operating by reducing the electric power consumption (see (3) in Fig. 1). Specifically, the mobile terminal device 101 sets a timer for the special mode, and shifts to the special mode of turning off a backlight, inactivating a rear-surface display, turning off various kinds of LEDs, suppressing the application operation, and rejecting the input of a special key.

Meanwhile, the mobile-communication switching station 103 that receives the reception electric power from the mobile terminal device 101 calculates an amplification amount of the electric power transmitted to the mobile terminal device 101, based on the reception electric power notified from the mobile terminal device 101, and calculates an extendable new intermittent reception interval (see (4) in Fig. 1). The mobile-communication base station 102 then amplifies the transmission electric power to the mobile terminal device 101 according to the calculated amplification amount of the transmission electric power (see (5) in Fig. 1), and transmits an instruction concerning the calculated new intermittent reception interval to the mobile terminal device 101 (see (6) in Fig. 1).

The mobile terminal device 101 receives the instruction concerning the new intermittent reception interval, and sets the new intermittent reception interval according to the instruction concerning this intermittent reception interval (see (7) in Fig. 1). Thereafter, the mobile terminal device 101 performs the intermittent reception operation (that is, the reception operation) following the set new intermittent reception interval (see (8) in Fig. 1). When a timer set in the above ends, the mobile terminal device 101 cancels the special mode, and shifts to the normal mode.

As described above, in the first embodiment, the mobile terminal device 101 controls to shift to the electric-power-reduction operation mode triggered by the call to the emergency telephone number. Therefore, the mobile terminal device 101 can properly reduce the electric power consumption of the mobile terminal device 101 in the emergency, as described in the above main characteristics. In the first embodiment, the mobile terminal device 101, the mobile-communication base station 102, and the mobile-communication switching station 103 perform notification of the reception electric power to each other, thereby amplifying the transmission power and setting a new intermittent reception interval. Therefore, this method can securely reduce the electric power consumption of the mobile terminal device in the emergency, as compared with the method of autonomously extending the intermittent reception period by the mobile terminal device independently of the reception power (according to this method, synchronization is easily out at a place of weak reception power, and position registration operation is performed frequently. As a result, the electric power consumption cannot be necessarily reduced).

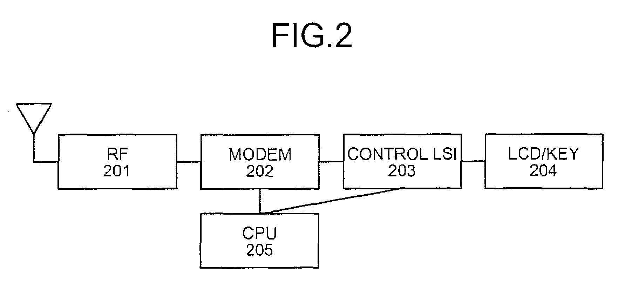

[Configuration of mobile terminal device]
Next, a hardware configuration of the mobile terminal device 101 shown in Fig. 1 is explained with reference to Fig. 2. Fig. 2 depicts a minimum configuration of the mobile terminal device 101 according to the first embodiment. The wireless unit of the mobile terminal device 101 includes an RF unit 201 that converts a received high-frequency band signal into a low frequency, and converts a frequency of a transmission signal into a high frequency, a MODEM unit 202 that modulates and demodulates digital data, a control LSI 203 that corrects errors and controls the MODEM unit 202, an LCD/KEY 204 that inputs and outputs information, and a CPU 205 that controls these units. While not shown in Fig. 2, the mobile terminal device 101 also includes an I/F that transmits and receives user data to and from the LCD/KEY 204 and a PC, and an SRAM or an SDRA used as a flash memory or a temporary memory for storing programs and telephone directory data. The CPU 205 can be mounted by a plural number including a DSP, instead of one CPU.

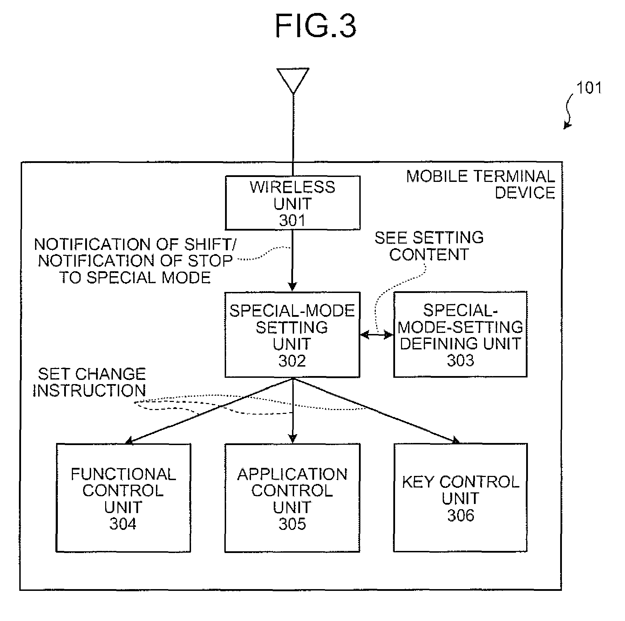

Next, a software configuration of the mobile terminal device 101 shown in Fig. 1 is explained with reference to Fig. 3. Fig. 3 is a software configuration diagram of the mobile terminal device 101 according to the first embodiment. As shown in Fig. 3, the mobile terminal device 101 includes a wireless unit 301, a special-mode setting unit 302, a special-mode-setting defining unit 303, a functional control unit 304, an application control unit 305, and a key control unit 306.

Among the above units, the special-mode-setting defining unit 303 is a unit that stores the setting content of the special mode. Specifically, the special-mode-setting defining unit 303 stores a control unit (the functional control unit 304, or the application control unit 305, the key control unit 306) to be set at the special-mode shift time, and a function to be controlled by each control unit, or application, and is referenced by the special-mode setting unit 302 described later.

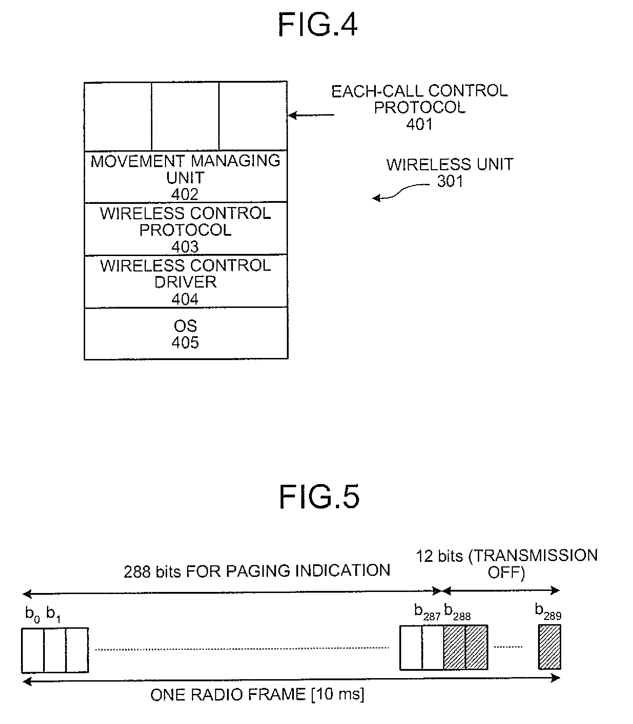

As shown in Fig. 4, the wireless unit 301 has a software configuration including an each-call control protocol 401, a movement managing unit 402, a wireless control protocol 403, a wireless control driver 404, and an OS 405. Among them, the wireless control protocol 403 is divided into a Layer 2 for performing a retransmission control between the network and the mobile terminal device, and a Layer 3 for performing a procedure concerning the wireless control. The wireless control driver 404 instructs a setting of hardware in response to the instruction from the wireless control protocol 403, and gives instructions to the DSP. The wireless control driver 404 notifies an event from hardware or the DSP to the wireless control protocol 403. The movement managing unit 402 performs movement management of the mobile terminal device 101. The each-call control protocol 401 is a protocol group for performing a call control in the unit of a circuit switching and a packet switching, and also communicates with the special setting unit 302 or the functional control unit 304.

The wireless unit 301 is a processing unit that performs various kinds of process including the notification of information to the mobile-communication base station 102. Specifically, the wireless unit 301 performs a process of determining whether a destination number contained in the transmission signal corresponds to an emergency call number, a process of notifying reception electric power, a process of notifying a shift/stop to the special mode to the special-mode setting unit 302, and measuring a special-mode time, a process of setting a new intermittent reception interval, a process of performing a reception operation at the new intermittent reception interval, and a process of notifying the end of the special mode to the special-mode setting unit 302, and deleting a held encryption key. Among these processes, the processes closely relevant to the present invention are explained in detail below.

The wireless unit 301 determines whether the destination number contained in the transmission signal corresponds to the emergency call number. That is, for example, when the USIM (Universal Subscriber Identity Module) or the SIM (GSM Subscriber Identity Module) is inserted in the mobile terminal device 101, the wireless unit 301 compares the emergency call number stored in the USIM/SIM with the destination telephone number contained in the transmission signal. On the other hand, when the USIM/SIM is not inserted in the mobile terminal device 101, the wireless unit 301 compares the emergency call signal held in the circuit switching protocol with the destination telephone number of the transmission signal.

When the destination number corresponds to the emergency call as a result of the comparison, the wireless unit 301 transmits EMERGENCY SETUP indicating the emergency transmission to the mobile-communication switching station 103 via the mobile-communication base station 102. Thereafter, when the wireless unit 301 receives a response signal from the mobile-communication switching station 103, the mobile terminal device 101 shifts to the emergency call communication. This response signal contains an encryption key (a decryption key for decrypting encrypted notification information) explained later in a second embodiment. The circuit switching protocol of the wireless unit 301 temporarily holds this encryption key.

While the wireless unit 301 is in the emergency-call communication, the mobile terminal device 101 measures a reception level of notification information of the in-zone cell in a constant cycle, and notifies the measured reception cycle to the mobile-communication switching station 103. When the mobile terminal device 101 is in handover, the wireless unit 301 notifies a reception level of all connected notification information of the mobile-communication base station 102 (that is, active cells).

Upon ending the emergency call communication, the wireless unit 301 notifies the special-mode setting unit 302 to shift to the special mode. When the mode is shifted to the special mode, a circuit-switching call control protocol of the wireless unit 301 notifies the movement managing unit 402 and the wireless control protocol 403 that the mode is shifted to the special mode. In this notification, the circuit-switching call control protocol of the wireless unit 301 delivers the held encryption key to the wireless control protocol 403.

Upon receiving the notification of the shift to the special mode, the wireless control protocol 403 of the wireless unit 301 starts the timer. This timer is used to measure a valid period of the special mode. A timer value can be an optional one determined by the instruction from the network or by the setting from the functional control unit 304, or can be a fixed value held by the wireless control protocol 403.

Further, when the mobile terminal device 101 shifts to the special mode after ending the emergency call communication, the wireless unit 301 receives PICH (Page Indicator Channel) indicating presence or absence of a call arrival, at a predetermined intermittent reception interval, after receiving BCH (Broadcast Channel, notification information). Specifically, the PICH is configured as shown in Fig. 5. During the normal intermittent reception time, the wireless unit 301 receives PI (page indicator) of a self-arrival group on SFN (System Frame Number) corresponding to the timing of the intermittent reception interval, from a call arrival group calculated from a Page Indicator number instructed in the notification information (that is, a bit number which needs to be received by one Page Indicator (hereinafter, suitably expressed as "PI") out of 288 bits) and from IMSI (International Mobile Subscriber Identity).

On the other hand, in the special mode, as described later, the mobile-communication base station 102 assigns a multiple of the current intermittent reception interval using a signal band, not usually used, of the PI transmission channel (that is, as shown in Fig. 5, a few bits out of 12 bits in which information is not transmitted in the normal mode. A provider can select what bits are to be used, or can instruct in the normal notification information), and transmits a new intermittent reception interval to the mobile terminal device 101 at plural times. The wireless control driver 404 of the wireless unit 301 receives information concerning the new intermittent reception interval at plural times to improve reliability, and performs soft-decision majority, secures a multiple of the intermittent reception interval, and notifies the multiple to the wireless control protocol 403. The wireless control protocol 403 resets the new intermittent reception interval from the secured multiple of the intermittent reception interval, via the wireless control driver 404. Thereafter, the mobile terminal device 101 performs the reception operation at the new intermittent reception interval.

During the waiting at the new intermittent reception interval (during the reception in the special mode), the wireless unit 301 monitors the PI and the intermittent-reception interval multiple at the new intermittent reception interval, and monitors the remaining bits excluding bits in which the multiple of the intermittent reception interval is assigned, from the 12 bits not usually transmitted shown in Fig. 5, as described in detail later in the second embodiment.

When the timer started by the wireless control protocol 403 at the special-mode shift time is timed out, the wireless control protocol 403 of the wireless unit 301 ends the special mode, notifies the end of the special mode to the special-mode setting unit 302, and deletes the held encryption key.

The special-mode setting unit 302 is a unit that receives a notification of the shift to the special mode and the stop notification from the wireless unit 301, and a notification of a setting to other component (the functional control unit 304, the application control unit 305, the key control unit 306). Specifically, the special-mode setting unit 302 obtains the setting content of the special mode from the special-mode-setting defining unit 303. This setting content contains the control unit (the functional control unit 304, or the application control unit 305, the key control unit 306) to be set, and a function to be controlled by each control unit, or application. The special-mode setting unit 302 notifies a special-mode setting request to each control unit to be set, following the obtained setting content. The special-mode setting unit 302 corresponds to an "operation mode control unit" described in the claims.

The functional control unit 304 is a unit that controls each function (backlight, backlight display, etc.) of the mobile terminal device 101. Specifically, the functional control unit 304 receives a notification of a shift to the special mode from the special-mode setting unit 302, and performs the setting contained in the notification (change of brightness and turning off of the backlight, inactivation of the background display, change of brightness and turning off of various LEDs, infrared communication, and suppression of the USB-connection communication function).

The application control unit 305 is a unit that controls the application of the mobile terminal device 101. Specifically, upon receiving a notification of a shift to the special mode from the special-mode setting unit 302, the application control unit 305 performs the setting contained in the notification (suppression of alarm operation of the alarm application, or inactivation of user starting of the application irrelevant to the telephone transmission or call arrival record).

The key control unit 306 controls a key of the mobile terminal device 101. Specifically, upon receiving a notification of a shift to the special mode from the special-mode setting unit 302, the key control unit 306 shifts to the mode of rejecting a key input, and permits the key operation only when a depression of a special key is permitted.

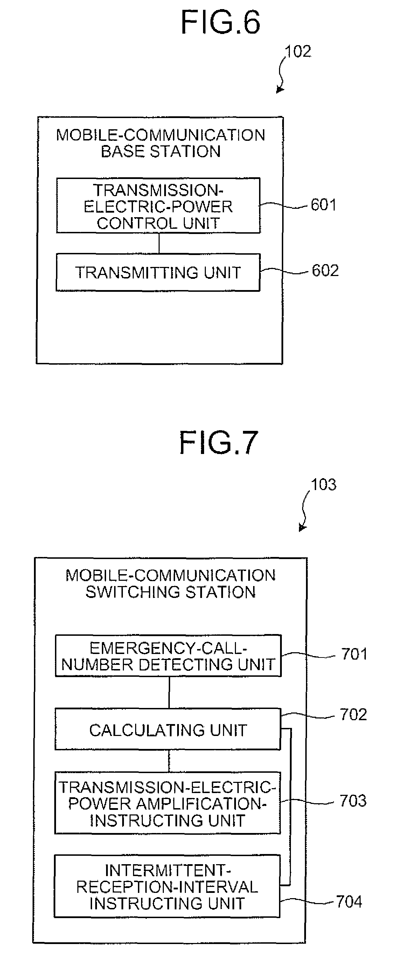

[Configurations of mobile-communication base station and mobile-communication switching station]
Next, configurations of the mobile-communication base station 102 and the mobile-communication switching station 103 shown in Fig. 1 are explained. Fig. 6 depicts the configuration of the mobile-communication base station 102 according to the first embodiment. Fig. 7 depicts the configuration of the mobile-communication switching station 103 according to the first embodiment.

As shown in Fig. 6, the mobile-communication base station 102 includes a transmission-electric-power control unit 601 and a transmitting unit 602.

Out of the above, the transmission-electric-power control unit 601 is a processing unit that controls transmission electric power to the mobile terminal device 101. Specifically, upon receiving an amplification request of transmission electric power from the mobile-communication switching station 103, the transmission-electric-power control unit 601 instructs the transmitting unit 602 to amplify the electric power. The transmission-electric-power control unit 601 corresponds to a "transmission electric-power amplifying unit" described in the claims.

The transmitting unit 602 is a processing unit that transmits BCH (notification information) and PICH to the mobile terminal device 101. Upon receiving the instruction to amplify the transmission electric power from the transmission-electric-power control unit 601, the transmitting unit 602 amplifies the transmission electric power, and transmits the BCH and the PICH in the amplified transmission electric power. Upon receiving the information of an extendable new intermittent reception interval from the mobile-communication switching station 103, the transmitting unit 602 instructs a multiple of the current intermittent reception interval, using a signal band, not usually used, of the PI transfer channel (that is, as shown in Fig. 5, a few bits out of the 12 bits in which information is not transmitted in the normal mode), thereby transmitting the new intermittent reception interval to the mobile terminal device 101 continuously at plural times. The transmitting unit 602 corresponds to an "intermittent reception-interval transmitting unit" described in the claims.

As shown in Fig. 7, the mobile-communication switching station 103 includes an emergency-call-number detecting unit 701, a calculating unit 702, a transmission-electric-power amplification-instructing unit 703, and an intermittent-reception-interval instructing unit 704.

Out of the above, the emergency-call-number detecting unit 701 detects a transmission of an emergency call number (EMERGENCY SETUP) from the mobile terminal device 101. Specifically, the emergency-call-number detecting unit 701 in the circuit switching protocol of the mobile-communication switching station 103 detects the transmission of the emergency call number (EMERGENCY SETUP) from the mobile terminal device 101.

The calculating unit 702 is a processing unit that calculates the amplification amount of the transmission electric power and the intermittent reception interval. Specifically, the calculating unit 702 calculates the electric power to be amplified and the extendable intermittent reception interval, from the transmission electric power of the notification information instructed to the mobile-communication base station 102 during the normal time and the reception power notified from the mobile terminal device 101. The calculating unit 702 corresponds to a "calculating unit" described in the claims.

The transmission-electric-power amplification-instructing unit 703 is a processing unit that notifies the electric power to be amplified to the mobile-communication base station 102. Specifically, the transmission-electric-power amplification-instructing unit 703 notifies the electric power to be amplified calculated by the calculating unit 702 to the transmission-electric-power control unit. 601 of the mobile-communication base station 102.

The intermittent-reception-interval instructing unit 704 is a processing unit that notifies the extendable intermittent reception interval to the mobile-communication base station 102. Specifically, the intermittent-reception-interval instructing unit 704 notifies the extendable intermittent reception interval calculated by the calculating unit 702 to the transmission-electric-power control unit 601 of the mobile-communication base station 102.

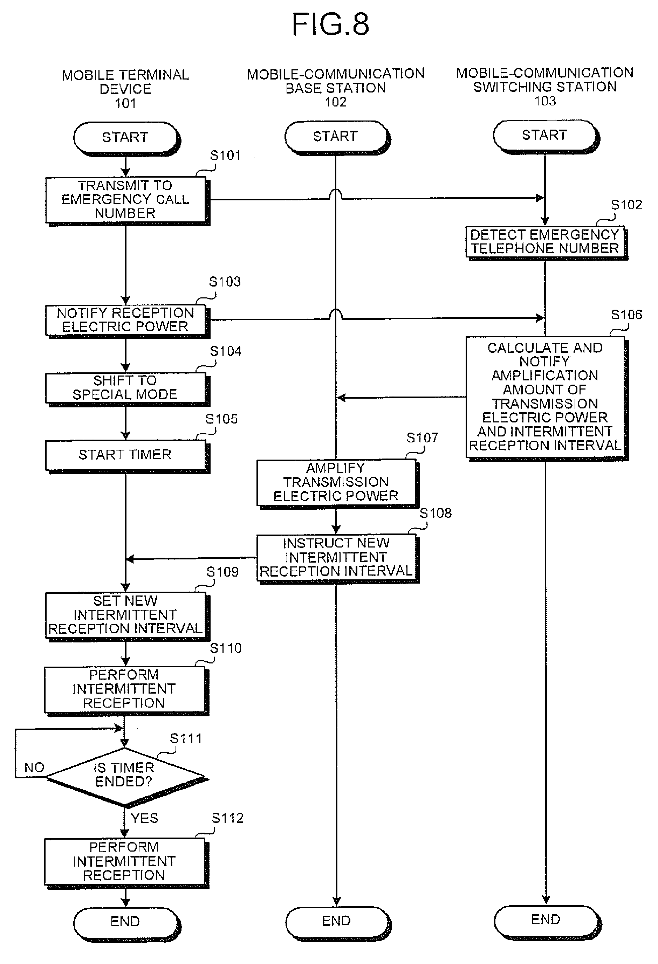

[Process by communication system]
Next, a process by the communication system according to the first embodiment is explained. Fig. 8 is a sequence diagram of a process flow of the network control system.

When the user transmits the emergency call number by depressing the emergency call number (110, for example) or the emergency communication exclusive button, the mobile terminal device 101 transmits EMERGENCY SETUP indicating the emergency call transmission, to the mobile-communication switching station 103 (step S101). The mobile-communication switching station 103 detects the transmission (EMERGENCY SETUP) of the emergency call number from the mobile terminal device 101, by the emergency-call-number detecting unit 701 in the circuit switching protocol of the mobile-communication switching station 103 (step S102). On the other hand, the mobile terminal device 101 receives a response signal from the mobile-communication switching station 103, and shifts to the emergency call communication.

During the emergency call communication, the mobile terminal device 101 measures a reception level of the notification information of the in-zone cell in a constant cycle, and notifies the measured reception cycle to the mobile-communication switching station 103 via the mobile-communication base station 102 (step S103). After completing the emergency call communication, the mobile terminal device 101 shifts to the special mode (step S104), and starts the timer that measures the valid period of the special mode (step S105). In the special mode, the mobile terminal device 101 turns off the backlight, inactivates the rear surface display, turns of various kinds of LEDs, suppresses the operation of the application, and rejects the input of the special key.

On the other hand, the mobile-communication switching station 103 receives the reception level from the mobile terminal device 101, calculates the electric power to be amplified and the extendable intermittent reception interval, from the transmission electric power of the notification information instructed to the mobile-communication base station 102 during the normal time and the reception power notified from the mobile terminal device 101. The mobile-communication switching station 103 notifies the calculated result to the mobile-communication base station 102 (step S106).

The mobile-communication base station 102 receives the notification of the electric power to be amplified and the extendable intermittent reception interval from the mobile-communication switching station 103, and amplifies the transmission power of the BCH (notification information) and the PICH to the mobile terminal device 101 (step S107). The mobile-communication base station 102 assigns the multiple of the current intermittent reception interval using a signal band, not usually used, of the PI transmission channel (that is, as shown in Fig. 5, a few bits out of 12 bits in which information is not transmitted in the normal mode), and transmits the new intermittent reception interval to the mobile terminal device 101 at plural times (step S108).

On the other hand, the mobile terminal device 101 receives the information concerning the new intermittent reception interval by several times to improve reliability, performs soft-decision majority, secures a multiple of the intermittent reception interval, and resets the new intermittent reception interval from the secured multiple of the intermittent reception interval (step S109). In the subsequent special mode, the mobile terminal device 101 performs the reception operation at the new intermittent reception interval (step S110). That is, the mobile terminal device 101 monitors the PI and the multiple of the intermittent reception interval at the new intermittent reception interval, and monitors the remaining bits excluding the bits to which the multiple of the intermittent reception interval is assigned from the 12 bits which are not usually transmitted shown in Fig. 5, as described in detail later.

Thereafter, when the timer started at the above step S105 is timed out (YES at step S111), the mobile terminal device 101 ends the special mode (step S112).

[Effects of first embodiment]
As described above, it is determined whether there is an emergency. When it is determined that there is an emergency, the mode is controlled to return to the special mode. Therefore, the electric power consumption of the mobile terminal device 101 can be properly reduced in the emergency.

According to the first embodiment, when there is a transmission to the emergency telephone number as a communication destination for communication in an emergency, it is determined that the call is in the emergency. Therefore, triggered by the call to the emergency telephone number, the electric power consumption of the mobile terminal device can be reduced.

According to the first embodiment, in the electric-power-reduction operation mode, control is performed to reduce the electric power consumption due to one or plural of the backlight of the mobile terminal device 101, the rear-surface display of the mobile terminal device 101, brightness of the LED of the mobile terminal device 101, the infrared communication function of the mobile terminal device 101, the USB-connection communication function of the mobile terminal device 101, the application of the mobile terminal device 101, and the key of the mobile terminal device 101. Therefore, the electric power consumption of the mobile terminal device can be properly reduced in the emergency by reducing the electric power consumption due to these factors.

According to the first embodiment, the mobile terminal device 101 determines whether there is an emergency. When it is determined that there is an emergency, the mobile terminal device 101 controls to shift to the special mode. Therefore, the electric power consumption of the mobile terminal device 101 can be properly reduced in the emergency. When it is determined that there is an emergency, the mobile terminal device 101 notifies reception electric power from the network to the mobile-communication switching station 103. The mobile-communication switching station 103 calculates an amplification amount of transmission power to the mobile terminal device 101 and a new intermittent reception interval based on the notified reception electric power. The mobile-communication base station 102 amplifies the transmission power according to the calculated amplification amount of transmission power, and transmits the instruction concerning the new intermittent reception interval to the mobile terminal device. The mobile terminal device 101 sets the new intermittent reception interval according to the instruction concerning the intermittent reception interval transmitted from the mobile-communication base station 102. Therefore, this method can securely reduce the electric power consumption of the mobile terminal device 101 in the emergency, as compared with the method of autonomously extending the intermittent reception period by the mobile terminal device 101 independently of the reception power (according to this method, synchronization is easily out at a place of weak reception power, and position registration operation is performed frequently. As a result, the electric power consumption cannot be necessarily reduced).

### Second embodiment

While the embodiment of the present invention has been explained above, the present invention can be also performed in various different modes other than the above embodiment. Another embodiment of the present invention will be explained below as a second embodiment.

(1) Notification in special mode
While it is explained in the first embodiment that the mobile-communication switching station 103 notifies the information of a new intermittent reception interval to the mobile terminal device 101 in the special mode, the present invention is not limited to this. In the present invention, the mobile-communication switching station 103 can notify the mobile terminal device 101 about the end instruction of the special mode or the transmission-source telephone number in the special mode (transmission-source telephone number of the other party who calls the mobile terminal device 101 in the special mode). The end instruction of the special mode and the notification of the transmission-source telephone number in the special mode from the mobile-communication switching station 103 to the mobile terminal device 101 are explained below.

As explained in the first embodiment, during the waiting at the new intermittent reception interval (during the reception in the special mode), the wireless unit 103 of the mobile terminal device 101 monitors the PI and the intermittent-reception interval multiple at the new intermittent reception interval, and monitors the remaining bits excluding bits in which the multiple of the intermittent reception interval is assigned, from the 12 bits not usually transmitted shown in Fig. 5.

On the other hand, in a predetermined case (at a timing of ending the special mode, and a timing when there is a transmission to the mobile terminal device 101 in the special mode), the mobile-communication switching station 103 instructs the mobile-communication base station 102 to include the end instruction of the special mode and the transmission-source telephone number in the special mode, into the notification information transmitted to the mobile terminal device 101, and to include the information indicating that this end instruction and the telephone number are transmitted by the notification information, into the PICH transmitted to the mobile terminal device 101 (specifically, the value of each bit is set to "1", in the remaining bits after excluding the bits to which the multiple of the intermittent reception interval is assigned from the 12 bits not usually transmitted indicated in Fig. 5). The mobile-communication base station 102 receives this instruction, and includes the end instruction of the special mode and the transmission-source telephone number in the special mode, into the notification information transmitted to the mobile terminal device 101, and also includes the information indicating that this end instruction and the telephone number are transmitted by the notification information, into the PICH transmitted to the mobile terminal device 101.

The reason for notifying the end instruction and the telephone number by the notification information is that the end instruction and the telephone number can be obtained while maintaining the intermittent reception, without the need for starting the dedicated physical channel. More specifically, during the special mode, the mobile-communication switching station 103 restricts the call arrival to the mobile terminal device 101 shifted to the special mode. When the owner of the mobile terminal device who transmits the emergency call is a distressed person, there is considered an incoming call inquiring into the distressed person. However, when there is no call arrival in the mobile-communication switching station 103, the mobile terminal device 101 cannot know the call arrival. According to the method that the mobile terminal device 101 handles the call as a missed call, the dedicated channel is once started, and the telephone number of the other party is notified. Therefore, this is the same operation as the normal call arrival operation. Further, the call is once out from the intermittent reception state. Consequently, the effect of low consumption becomes small. For the above reasons, in the second embodiment, the telephone number of the other party is notified by the notification information.

. The notification information containing the end instructing of the special mode and the transmission-source telephone number in the special mode is usually simultaneously notified to many mobile terminal devices. However, the above end instruction and the telephone number are to be notified to only a specific mobile terminal device 101 shifted to the special mode. Therefore, the mobile-communication switching station 103 instructs the mobile-communication base station 102 to encrypt the end instruction of the special mode and the transmission-source telephone number in the special mode, using an encryption key already notified to the mobile terminal device 101 in the emergency call communication, and include the encrypted information into the notification information to be transmitted to the mobile terminal device 101.

On the other hand, as described above, during the reception at the new intermittent reception interval, the mobile terminal device 101 shifted to the special mode monitors the PI and the intermittent-reception interval multiple at the new intermittent reception interval, and monitors the remaining bits excluding the bits to which the multiple of the intermittent reception interval is assigned from the 12 bits not usually transmitted shown in Fig. 5. When the remaining bits contain the information indicating that the transmission-source telephone number and the like are transmitted by the notification information, the wireless unit 301 decrypts the transmission-source telephone number and the end instruction of the special mode contained in the notification information, and obtains the decrypted information.

When the special-mode end instruction is obtained from the notification information, the wireless control protocol 403 of the wireless unit 301 ends the special mode, notifies the end of the special mode to the special-mode setting unit 302, and deletes the held encryption key. On the other hand, when the transmission-source telephone number is obtained from the notification information, the wireless unit 301 notifies this transmission-source telephone number to the application control unit 305. The application control unit 305 receives this transmission-source telephone number, holds this telephone number as the missed call, and sounds display of PICT images and the call arrival sound for a very short period, thereby notifying the missed call arrival to the user of the mobile terminal device 101.

As described above, the instruction concerning the intermittent reception interval is transmitted using a signal band, not usually used, of the PI transfer channel, and the instruction concerning the intermittent reception interval transmitted in the signal band is received.
Because the existing PI transfer channel can be used, a new exclusive channel does not need to be produced.

The mobile-communication base station 102 transmits the call arrival information indicating a call arrival to the mobile terminal device 101, to the mobile terminal device 101, using the signal band, not usually used, of the PI transfer channel, and transmits the transmission-source telephone number of the call arrival to the mobile terminal device 101 using the notification information channel. When the mobile terminal device 101 receives the transmitted call arrival information in the signal band, the mobile terminal device 101 obtains the transmitted transmission-source telephone number in the notification information channel. Therefore, this method can obtain the other-party telephone number in the state of reducing the electric power consumption of the mobile terminal device 101 in the emergency, as a result of maintaining the intermittent reception state without requiring a starting of the dedicated physical channel, as compared with the method of handling the call as the missed call as usual (according to this method, as a result of notifying the other-party telephone number by starting the dedicated physical channel, electric power is consumed like in the usual call arrival operation. Further, because the state is out from the intermittent reception state, the electric power consumption cannot be necessarily reduced).

(2) Instruction of shift to special mode from external terminal
In the above first embodiment, it is explained that the mobile terminal device shifts to the special mode, in the emergency telephone number in the mobile terminal device. However, the present invention is not limited thereto. When there is a call arrival of an emergency instruction indicating the emergency from the external terminal, the mobile terminal device can shift to the special mode.

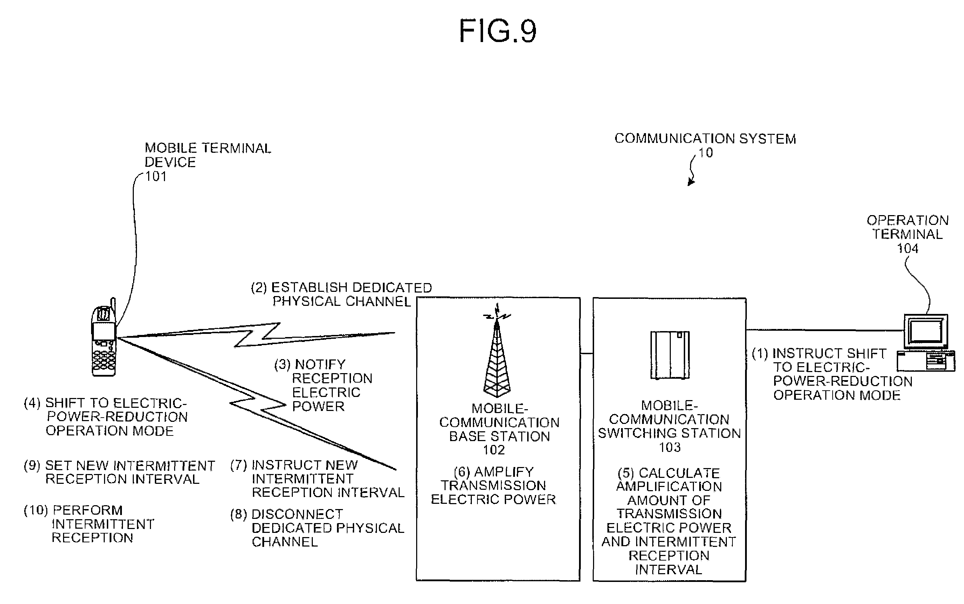

Specifically, as shown in Fig. 9, when it is necessary to instruct the specific mobile terminal device 101 to shift to the special mode, an operation terminal 104 instructs the mobile-communication switching station 103 to shift to the special mode (see (1) in Fig. 9). The mobile-communication switching station 103 receives this instruction, and once performs a call arrival to the mobile terminal device 101 concerned. This is because the mobile terminal device 101 is in the normal mode, the mobile terminal device 101 is performing only the normal call-arrival monitoring. Based on this call arrival, the mobile-communication switching station 103 establishes a dedicated physical channel between the mobile terminal device 101 and the mobile-communication base station 102, and establishes a logical link between the mobile terminal device 101 and the mobile-communication switching station 103 (see (2) in Fig. 9). Thereafter, the mobile terminal device 101 notifies the mobile-communication switching station 103 about a reception level of the notification information from the in-zone mobile-communication base station 102, and controls to shift to the special mode of operating in the reduced electric power consumption (see (3) to (4) in Fig. 9).

Thereafter, like in the first embodiment, the mobile-communication switching station 103 calculates the extendable new intermittent reception interval (see (5) in Fig. 9). The mobile-communication base station 102 amplifies the transmission electric power (see (6) in Fig. 9), and transmits the instruction concerning the calculated new intermittent reception interval to the mobile terminal device 101 (see (7) in Fig. 9).

The mobile terminal device 101 then receives the instruction concerning the new intermittent reception interval, and disconnects the logical link and the dedicated physical channel (see (8) in Fig. 9). Thereafter, like in the first embodiment, the mobile terminal device 101 receives the instruction concerning the new intermittent reception interval, sets the new intermittent reception interval according to the instruction concerning the intermittent reception interval (see (9) in Fig. 9), and performs the intermittent reception operation (what is called the reception operation) following the new set intermittent reception interval (see (10) in Fig. 9).

As described above, when there is a call arrival of the emergency instruction indicating the emergency from the operation terminal 104, it is determined that there is an emergency. Therefore, even when the owner of the mobile terminal device 101 cannot perform the operation of the mobile terminal device 101 in the emergency (for example, a transmission operation to the emergency telephone number), the electric power consumption of the mobile terminal device 101 can be reduced.

(3) System configuration or the like
Among the respective processes described in the embodiments, all or a part of the processes explained as being performed automatically can be performed manually, or all or a part of the processes explained as being performed manually can be performed automatically by a known method. In addition, the process procedures, control procedures, specific names, and information including various kinds of data and parameters shown in the present specification or the drawings can be optionally changed unless otherwise specified.

The respective constituent elements of the devices shown in the drawings are functionally conceptual, and physically the same configuration is not always necessary. That is, the specific mode of dispersion and integration of the devices is not limited to the shown ones, and all or a part thereof can be functionally or physically dispersed or integrated in an optional unit, according to various kinds of load and the status of use. For example, the special-mode setting unit 302 and the special-mode-setting defining unit 303 can be integrated. Further, all or an optional part of various processing functions performed by the devices can be realized by a CPU or a program analyzed and executed by the CPU, or can be realized as hardware by the wired logic.

The mobile-terminal device method explained in the present embodiment can be achieved by causing a computer such as a personal computer or a workstation to execute a program prepared in advance. This program can be distributed via the network such as the Internet. This program can be recorded onto a computer-readable recording medium such as a hard disk, a flexible disk (FD), a CD-ROM, and a DVD, and the computer can execute the program by reading the program from the recording medium.

### INDUSTRIAL APPLICABILITY

As described above, the mobile terminal device, the communication system, the electric power control method, and the electric power control program according to the present invention are useful for operations by reducing electric power consumption, and are particularly suitable to properly reduce the electric power consumption of the mobile terminal device in an emergency.

## Claims

1. A mobile terminal device having an electric-power-reduction operation mode for operation with reduced electric power consumption, the mobile terminal device comprising:
an emergency determining unit that determines whether there is an emergency; and
an operation mode control unit that controls to shift to the electric-power-reduction operation mode when the emergency determining unit determines that there is the emergency.

2. The mobile terminal device according to claim 1, wherein the emergency determining unit determines that there is the emergency, when there is a call transmission to an emergency telephone number as a communication destination for communication in the emergency.

3. The mobile terminal device according to claim 1, wherein the emergency determining unit determines that there is the emergency, when there is a call arrival indicating an emergency instruction for the emergency from an external terminal.

4. The mobile terminal device according to any one of claims 1 to 3, wherein the operation mode control unit controls to reduce the electric power consumption due to one or some or all of a backlight of the mobile terminal device, a rear-surface display of the mobile terminal device, brightness of an LED of the mobile terminal device, an infrared communication function of the mobile terminal device, an USB-connection communication function of the mobile terminal device, an application of the mobile terminal device, and a key of the mobile terminal device, in the electric-power-reduction operation mode.

5. A communication system comprising:
a mobile terminal device that has an electric-power-reduction operation mode for operation with reduced electric power consumption; and
a network control device that controls a network to which the mobile terminal device is connected, wherein
the mobile terminal device comprises
an emergency determining unit that determines whether there is an emergency,
an operation mode control unit that controls to shift to the electric-power-reduction operation mode when the emergency determining unit determines that there is the emergency,
a reception-electric-power notifying unit that notifies reception electric power from the network to the network control device, when the emergency determining unit determines that there is the emergency, and
an intermittent-reception-interval setting unit that sets a new intermittent reception interval according to an instruction concerning an intermittent reception interval transmitted from the network control device, after the reception-electric-power notifying unit notifies the reception power to the network control device, and
the network control device comprises
a calculating unit that calculates an amplification amount of transmission electric power to the mobile terminal device and the new intermittent reception interval based on the reception electric power notified by the reception-electric-power notifying unit,
a transmission electric-power amplifying unit that amplifies the transmission electric power according to the amplification amount of the transmission electric power calculated by the calculating unit, and
an intermittent-reception-interval transmitting unit that transmits an instruction concerning the new intermittent reception interval calculated by the calculating unit, to the mobile terminal device.

6. The communication system according to claim 5, wherein
the transmitting unit transmits an instruction concerning the intermittent reception interval using a signal band, not usually used, of a PI transfer channel, and
the receiving unit receives an instruction concerning an intermittent reception interval transmitted in the signal band.

7. The communication system according to claim 6, wherein
the network control device further comprises a call-arrival information transmitting unit that transmits call arrival information indicating a call arrival to the mobile terminal device to the mobile terminal device using a signal band, not usually used, of the PI transfer channel, and a transmission-source telephone-number transmitting unit that transmits a transmission-source telephone number of the call arrival to the mobile terminal device using a notification information channel, and
the mobile terminal device further comprises a transmission-source telephone-number obtaining unit that obtains in the notification information channel a transmission-source telephone number transmitted by the transmission-source telephone-number transmitting unit, when call arrival information transmitted by the call-arrival information transmitting unit is received in the signal band.

8. A power control method for a mobile terminal device having an electric-power-reduction operation mode for operation with reduced electric power consumption, the power control method comprising:
an emergency determining step of determining whether there is an emergency; and
an operation mode control step of controlling to shift to the electric-power-reduction operation mode when it is determined that there is the emergency at the emergency determining step.

9. A power control program for causing a computer to perform power control method for a mobile terminal device having an electric-power-reduction operation mode for operation with reduced electric power consumption, the power control program causing the computer to perform:
an emergency determining step of determining whether there is an emergency; and
an operation mode control step of controlling to shift to the electric-power-reduction operation mode when it is determined that there is the emergency at the emergency determining step.
